# EUROPÄISCHE PATENTANMELDUNG

(11) **EP 4 733 733 A1**
(43) Veröffentlichungstag der Anmeldung: **29.04.2026**
(21) Anmeldenummer: 25206766.5
(22) Anmeldetag: 06.10.2025
(51) Int. Cl.: G01M 5/00, G01N 3/22

(54) **VERFAHREN UND ÜBERWACHUNGSEINRICHTUNG ZUM ÜBERWACHEN EINER TORSIONSSTEIFIGKEIT EINES ROTATORISCH ANGETRIEBENEN SYSTEMS**

(30) Priorität: 28.10.2024 DE 102024210359
(71) Anmelder: ZF Friedrichshafen AG, 88046 Friedrichshafen (DE); ZF Wind Power Antwerpen N.V., 3920 Lommel (BE)
(72) Erfinder: Ortmann, Sebastian, 97816 Lohr (DE); Becker, Tobias, 2018 Antwerp (BE)
(74) Vertreter: ZF Friedrichshafen AG

(57) **Zusammenfassung**

Offenbart ist ein Verfahren zum Überwachen einer Torsionssteifigkeit eines rotatorisch angetriebenen Systems, mit den Schritten: Bestimmen (S1a) eines ersten torsionssteifigkeitsabhängigen Systemparameters (P1), welcher sich in einem ersten Bereich des Systems einstellt, Bestimmen (S1b) eines zweiten torsionssteifigkeitsabhängigen Systemparameters (P2), welcher sich in einem zweiten Bereich des Systems einstellt, Voraussetzen (S0), dass ein Bereich der beiden Bereiche eine vorbestimmte Torsionssteifigkeit aufweist, Vergleichen (S2) von dem ersten Systemparameter (P1) mit dem zweiten Systemparameter (P2), und Bestimmen (S3) einer Änderung der Torsionssteifigkeit des Systems (100) in dem weiteren Bereich basierend auf einem aus dem Schritt des Vergleichens (S2) resultierenden Vergleichsergebnisses (V). Zudem ist eine Überwachungseinrichtung, welche eingerichtet ist, das Verfahren durchzuführen, und eine Anlage mit einer derartigen Überwachungseinrichtung offenbart.

## Beschreibung

### Technisches Gebiet

Die vorliegende Erfindung bezieht sich auf ein Verfahren und eine Überwachungseinrichtung zum Überwachen einer Torsionssteifigkeit eines rotatorisch angetriebenen Systems. Die vorliegende Erfindung bezieht sich zudem auf eine Anlage mit einer derartigen Überwachungseinrichtung.

### Stand der Technik

Aus dem Stand der Technik ist es bekannt, die Torsionssteifigkeit einer rotierenden Maschinenkomponente basierend auf einem erfassten Verdrehwinkel der Maschinenkomponente und einem festgelegten Torsionsmoment oder einer mit dem Torsionsmoment in Verbindung stehenden, festgelegten Größe zu bestimmen. Für das Bestimmen der Torsionssteifigkeit einer rotierenden Maschinenkomponente ist es daher nach dem Stand der Technik bekannt, neben einem erfassten Verdrehwinkel auch ein festgelegtes Torsionsmoment zu berücksichtigen. Die Bestimmung der Torsionssteifigkeit erfolgt daher gemäß aus dem Stand der Technik bekannter Verfahren in Abhängigkeit des Torsionsmoments.

### Darstellung der Erfindung

Ein Aspekt betrifft ein Verfahren zum Überwachen einer Torsionssteifigkeit eines rotatorisch angetriebenen Systems. Bei dem System kann es sich um ein Maschinensystem, beispielsweise um ein Antriebssystem zum Übertragen eines Drehmoments, handeln. Das Verfahren kann daher zur Zustandsüberwachung des Maschinensystems durchgeführt werden. Das System kann eine rotatorisch angetriebene Komponente aufweisen oder sein, wobei das Verfahren zum Überwachen der Torsionssteifigkeit der rotatorisch angetriebenen Komponente durchgeführt werden kann. Bei der Komponente kann es sich um eine Maschinenkomponente handeln. Bei der Torsionssteifigkeit kann es sich um eine Torsionsfestigkeit oder eine Verdrehungsfestigkeit des Systems handeln. Die Torsionssteifigkeit kann sich auf mindestens eines von einer Materialtorsionssteifigkeit einer Systemkomponente oder einer Verbindungstorsionssteifigkeit zweier Systemkomponenten beziehen. Die Materialtorsionssteifigkeit kann von einem Materialverschleiß oder einer Materialermüdung abhängen. Die Verbindungstorsionssteifigkeit kann von einem Spiel oder einem Schlupf zwischen den Systemkomponenten abhängen. Das rotatorisch angetriebene System weist eine Torsion auf, welche eine Verdrehung des Systems unter Einwirkung eines Torsionsmoments auf das System sein kann. Auf das rotatorisch angetriebene System kann ein Drehmoment übertragen werden oder einwirken, welches zu der Torsion des Systems führen kann. Nachfolgende Schritte des Verfahrens können wiederholt durchgeführt werden.

Das Verfahren weist als einen Schritt ein Bestimmen eines ersten torsionssteifigkeitsabhängigen Systemparameters auf. Der erste Systemparameter stellt sich basierend auf einem Torsionsmoment, welches auf das System einwirkt, in einem ersten Bereich des Systems ein. Der erste Systemparameter kann sich in Abhängigkeit der Torsionssteifigkeit, welche in dem ersten Bereich vorhanden ist, in dem ersten Bereich einstellen. Bei der Torsionssteifigkeit des ersten Bereichs kann es sich um die zu überwachende Torsionssteifigkeit des Systems handeln. Der erste Systemparameter kann ein Verdrehwinkel sein, welcher sich basierend auf dem Torsionsmoment in dem ersten Bereich einstellt. Der Verdrehwinkel kann auf einer Materialverdrehung des ersten Bereichs basieren. Alternativ zu dem Verdrehwinkel kann der erste Systemparameter eine Dehnung sein, welche sich basierend auf dem Torsionsmoment in dem ersten Bereich einstellt. Die Dehnung kann auf einer Materialdehnung in dem ersten Bereich basieren. Alternativ zu dem Verdrehwinkel kann der erste Systemparameter ferner ein Schwingungsparameter, beispielsweise eine Frequenz sein, welche sich basierend auf dem Torsionsmoment in dem ersten Bereich einstellen können.

Das Verfahren weist als einen weiteren Schritt ein Bestimmen eines zweiten torsionssteifigkeitsabhängigen Systemparameters auf. Der zweite Systemparameter stellt sich basierend auf dem Torsionsmoment, welches auf das System einwirkt, in dem zweiten Bereich des Systems ein. Der erste Systemparameter kann sich in Abhängigkeit der Torsionssteifigkeit, welche in dem zweiten Bereich vorhanden ist, in dem zweiten Bereich einstellen. Bei der Torsionssteifigkeit des zweiten Bereichs kann es sich um die zu überwachende Torsionssteifigkeit des Systems handeln. Der zweite Systemparameter kann ein Verdrehwinkel sein, welcher sich basierend auf dem Torsionsmoment in dem zweiten Bereich einstellt. Der Verdrehwinkel kann auf einer Materialverdrehung des zweiten Bereichs basieren. Alternativ zu dem Verdrehwinkel kann der zweite Systemparameter eine Dehnung sein, welche sich basierend auf dem Torsionsmoment in dem zweiten Bereich einstellt. Die Dehnung kann auf einer Materialdehnung in dem zweiten Bereich basieren. Der erste Bereich und der zweite Bereich können beabstandet voneinander sein, benachbart zueinander sein, aneinander angrenzen oder sich teilweise überlappen. Alternativ zu dem Verdrehwinkel kann der zweite Systemparameter ferner ein Schwingungsparameter oder eine Frequenz sein, welche sich basierend auf dem Torsionsmoment in dem zweiten Bereich einstellen können.

Gemäß entsprechender Ausführungsformen kann es sich bei dem ersten Systemparameter und dem zweiten Systemparameter um gleichartige oder andersartige Systemparameter handeln, welche sich in Abhängigkeit der Torsionssteifigkeit in dem ersten Bereich und dem zweiten Bereich einstellen können. Bei dem Torsionsmoment, welches auf das System einwirkt und ein Ausbilden des ersten Systemparameters und des zweiten Systemparameters bewirken kann, kann es sich um ein beim Durchführen des Verfahrens nicht vorbestimmtes und nicht zu bestimmendes Torsionsmoment handeln. Zum Durchführen des Verfahrens kann es daher in vorteilhafter und effizienter Weise nicht erforderlich sein, das Torsionsmoment qualitativ oder quantitativ zu bestimmen, um die Torsionssteifigkeit des Systems zu überwachen.

Das Verfahren weist als einen weiteren Schritt ein Voraussetzen, dass ein Bereich von dem ersten Bereich und dem zweiten Bereich eine vorbestimmte Torsionssteifigkeit aufweist, auf. In dem Schritt des Voraussetzens kann eine Annahme getroffen werden, dass der eine Bereich von dem ersten Bereich und dem zweiten Bereich die vorbestimmte Torsionssteifigkeit aufweist. Die vorbestimmte Torsionssteifigkeit kann eine in dem einen Bereich von dem ersten Bereich und dem zweiten Bereich zeitlich konstante Torsionssteifigkeit sein. Die vorbestimmte Torsionssteifigkeit kann eine bei einer Fertigung oder Inbetriebnahme des Systems bestimmte oder festgelegte Torsionssteifigkeit des einen Bereichs von dem ersten Bereich und dem zweiten Bereich sein, welche somit vor einem Durchführen des Verfahrens bestimmt worden ist. Das Verfahren kann daher zum Überwachen der Torsionssteifigkeit des Systems in einem Betrieb des Systems nach der Fertigung und Inbetriebnahme des Systems durchgeführt werden. Die vorbestimmte Torsionssteifigkeit kann ferner eine funktional vorbestimmte Torsionssteifigkeit sein, welche in Abhängigkeit von mindestens einem Einflussparameter vorbestimmt ist, welcher in dem Betrieb des Systems auf das System einwirkt. Die vorbestimmte Torsionssteifigkeit kann daher auch in Abhängigkeit des mindestens einen Einflussparameters vorbestimmt sein.

Das Verfahren weist als einen weiteren Schritt ein Vergleichen von dem ersten Systemparameter mit dem zweiten Systemparameter auf. Im Schritt des Vergleichs kann ein Verhältnis oder ein Quotient des ersten Systemparameters und des zweiten Systemparameters gebildet werden. Ein aus dem Schritt des Vergleichens resultierendes Vergleichsergebnis kann daher ein Verhältnis oder ein Quotient des ersten Systemparameters und des zweiten Systemparameters sein. Alternativ oder zusätzlich zu dem Verhältnis oder dem Quotient kann im Schritt des Vergleichs eine Differenz zwischen dem ersten Systemparameter und dem zweiten Systemparameter oder eine Abweichung des zweiten Systemparameters von dem ersten Systemparameter gebildet werden. Alternativ oder zusätzlich zu dem Verhältnis oder dem Quotienten kann daher ein aus dem Schritt des Vergleichens resultierendes Vergleichsergebnis auch eine Differenz zwischen dem ersten Systemparameter und dem zweiten Systemparameter oder eine Abweichung des zweiten Systemparameters von dem ersten Systemparameter sein. Der Schritt des Vergleichens, wie jeder andere Schritt des Verfahrens, kann für gleichartige Systemparameter und andersartige Systemparameter durchgeführt werden.

Das Verfahren weist als einen weiteren Schritt ein Bestimmen einer Änderung der Torsionssteifigkeit des Systems in dem weiteren Bereich von dem ersten Bereich und dem zweiten Bereich auf, wobei zu dem weiteren Bereich von dem ersten Bereich und dem zweiten Bereich in dem Schritt des Voraussetzens nicht vorausgesetzt worden ist, dass dieser die vorbestimmte Torsionssteifigkeit aufweist. Der weitere Bereich kann mindestens eine Systemkomponente aufweisen. Weise der weitere Bereich mindestens zwei Systemkomponenten auf, können diese miteinander zum Übertragen eines Drehmoments miteinander verbunden sein. Bei der Verbindung kann es sich um jede entsprechend bekannte Verbindung handeln. Die Änderung der Torsionssteifigkeit kann in einer Systemkomponente oder an der Verbindung auftreten. Bei der Änderung kann es sich um eine relative Änderung von der Torsionssteifigkeit des ersten Bereichs im Verhältnis zu der Torsionssteifigkeit des zweiten Bereichs oder umgekehrt handeln. Bei dem weiteren Bereich kann es sich um den auf eine veränderte oder verringerte Torsionssteifigkeit zu überwachenden Bereich handeln. Bei der Änderung kann es sich um eine lokale Änderung der Torsionssteifigkeit in dem weiteren Bereich handeln. Bei der Änderung der Torsionssteifigkeit kann es sich um eine Verringerung der Torsionssteifigkeit handeln. Mit dem Verfahren kann somit das System auf ein Versagen oder einen Bruch überwacht werden, welcher aus einer verringerten Torsionssteifigkeit in dem weiteren Bereich resultieren kann. Der Schritt des Bestimmens von der Änderung der Torsionssteifigkeit wird basierend auf einem aus dem Schritt des Vergleichens resultierenden Vergleichsergebnisses durchgeführt. In dem Schritt des Bestimmens von der Änderung der Torsionssteifigkeit in dem weiteren Bereich kann somit in Abhängigkeit des Quotienten, des Verhältnisses, der Differenz oder der Abweichung bestimmt werden, dass sich die Torsionssteifigkeit des Systems geändert hat. Im Schritt des Bestimmens von der Änderung der Torsionssteifigkeit kann bestimmt werden, dass die Änderung der Torsionssteifigkeit vorliegt, wenn sich der Quotient von einem vorbestimmten Quotienten, das Verhältnis von einem vorbestimmten Verhältnis, die Differenz von einer vorbestimmten Differenz oder die Abweichung von einer vorbestimmten Abweichung unterscheidet. In dem Schritt des Bestimmens von der Änderung der Torsionssteifigkeit kann somit bestimmt werden, dass sich die Torsionssteifigkeit des Systems geändert hat, wenn sich der Quotient, das Verhältnis, die Differenz oder die Abweichung zeitlich verändert. Hierfür können die Schritte des Verfahrens wiederholt durchgeführt werden, wobei der erste Systemparameter und der zweite Systemparameter wiederholt bestimmt und miteinander verglichen werden können.

Dem Bestimmen von der Änderung der Torsionssteifigkeit des Systems basierend auf dem Schritt des Vergleichens liegt die Erkenntnis zugrunde, dass eine Änderung der Torsionssteifigkeit des Systems mit dem Verfahren unabhängig von dem auf das System einwirkende Torsionsmoment bestimmt werden kann. Zudem liegt dem Schritt des Bestimmens von der Änderung der Torsionssteifigkeit somit als weitere Erkenntnis zugrunde, dass basierend auf dem Schritt des Vergleichens die Änderung der Torsionssteifigkeit auch unabhängig von einer auf das System einwirkenden Last bestimmt werden kann. Basierend auf dem im Schritt des Vergleichens durchführbaren relativen Vergleichen der Systemparameter, welches dem Bestimmen der Änderung der Torsionssteifigkeit zugrunde gelegt werden kann, kann somit eine lokale Änderung in einer Systemsteifigkeit unabhängig von einem auf das System wirkenden Moment oder einer auf das System wirkenden Last bestimmt werden. Ein Systemausfall, welcher auf einem Systemversagen durch eine verringerte Systemsteifigkeit basiert, kann so mit dem Verfahren vorausschauend erkannt werden.

Gemäß einer Ausführungsform des Verfahrens kann in dem Schritt des Bestimmens des ersten Systemparameters eine erste torsionssteifigkeitsabhängige Messgröße an dem ersten Bereich sensorisch erfasst werden. Gemäß dieser Ausführungsform kann in dem Schritt des Bestimmens des zweiten Systemparameters eine zweite torsionssteifigkeitsabhängige Messgröße an dem zweiten Bereich sensorisch erfasst werden. Weiter kann in dem Schritt des Vergleichens die erste Messgröße mit der zweiten Messgröße verglichen werden. Die erste Messgröße kann mindestens eines von einem an dem ersten Bereich sensorisch erfassten Verdrehwinkel und einer an dem ersten Bereich sensorisch erfassten Dehnung aufweisen. Die zweite Messgröße kann mindestens eines von einem an dem zweiten Bereich sensorisch erfassten Verdrehwinkel und einer an dem zweiten Bereich sensorisch erfassten Dehnung aufweisen. Bei einem aus dem Schritt des Vergleichens resultierenden Vergleichsergebnis kann es sich um ein Verhältnis zwischen den Messgrößen, einen Quotienten der Messgrößen, eine Differenz zwischen den Messgrößen oder um eine Abweichung von einer Messgröße der Messgrößen zu der weiteren Messgröße der Messgrößen handeln. Die erste Messgröße kann mit einem Sensor erfasst werden, welcher an dem ersten Bereich angeordnet ist. Die zweite Messgröße kann mit einem Sensor erfasst werden, welcher an dem zweiten Bereich angeordnet ist. Bei dem Sensor kann es sich um einen Winkelsensor, beispielsweise ein induktiver Sensor, einen Geschwindigkeitssensor oder einen Beschleunigungssensor zum Erfassen des Verdrehwinkels handeln. Weiter kann es sich bei dem Sensor um einen Dehnungssensor, beispielsweise ein Dehnungsmessstreifen oder ein Lichtwellenleiter, zum Erfassen der Dehnung handeln. Der erste Systemparameter kann die erste Messgröße aufweisen oder auf dieser basieren. Der zweite Systemparameter kann die zweite Messgröße aufweisen oder auf dieser basieren. Eine relative Bestimmung der torsionssteifigkeitsabhängigen Systemparameter kann somit in effizienter Weise durchgeführt werden.

Gemäß einer weiteren Ausführungsform des Verfahrens können in den Schritten des Bestimmens des ersten Systemparameters und des zweiten Systemparameters der erste Systemparameter und der zweite Systemparameter gleichartige Systemparameter sein. In dem Schritt des Vergleichens können somit gleichartige Systemparameter miteinander verglichen werden. Ferner können in den Schritten des Bestimmens des ersten Systemparameters und des zweiten Systemparameters die erste Messgröße und die zweite Messgröße gleichartige Messgrößen sein. Im Schritt des Vergleichens können somit auch gleichartige Messgrößen miteinander verglichen werden. Beispielsweise kann so eine Änderung der Torsionssteifigkeit des Systems basierend auf einem Verhältnis eines an dem ersten Bereich sensorisch erfassten Verdrehwinkels und eines an dem zweiten Bereich sensorisch erfassten Verdrehwinkels bestimmt werden. Unter der Voraussetzung, dass der eine Bereich von dem ersten Bereich und dem zweiten Bereich die vorbestimmte Torsionssteifigkeit aufweist, kann daher bestimmt werden, dass bei einer Abweichung eines Verhältnisses der Verdrehwinkel von einem vorbestimmten Verhältnis der Verdrehwinkel die Änderung der Torsionssteifigkeit des Systems in dem weiteren Bereich von dem ersten Bereich und dem zweiten Bereich vorliegt, zu welchem in dem Schritt des Voraussetzens nicht vorausgesetzt worden ist, dass dieser die vorbestimmte Torsionssteifigkeit aufweist. Unter der Annahme der vorbestimmten Torsionssteifigkeit kann somit zuverlässig verdrehwinkelbasiert überwacht werden, ob und in welchem Bereich die Änderung der Torsionssteifigkeit in dem System vorliegt.

Gemäß einer weiteren Ausführungsform des Verfahrens kann in dem Schritt des Bestimmens des ersten Systemparameters ein erster Verdrehwinkel bestimmt werden, welcher sich basierend auf dem Torsionsmoment in dem ersten Bereich einstellt. Gemäß dieser Ausführungsform kann in dem Schritt des Bestimmens des zweiten Systemparameters ein zweiter Verdrehwinkel bestimmt werden, welcher sich basierend auf dem Torsionsmoment in dem zweiten Bereich einstellt. Weiter kann in dem Schritt des Vergleichens der erste Verdrehwinkel mit dem zweiten Verdrehwinkel verglichen werden. Das aus dem Schritt des Vergleichens resultierende Vergleichsergebnis kann somit ein Verhältnis der Verdrehwinkel, ein Quotient der Verdrehwinkel, eine Differenz zwischen den Verdrehwinkeln oder eine Abweichung eines Verdrehwinkels der Verdrehwinkel von dem weiteren Verdrehwinkel der Verdrehwinkel sein. Bei dem ersten Verdrehwinkel kann es sich um den ersten Systemparameter oder die erste Messgröße handeln. Bei dem zweiten Verdrehwinkel kann es sich um den zweiten Systemparameter oder die zweite Messgröße handeln. Eine in dem System vorhandene Sensorik zum Erfassen der Verdrehwinkel in dem ersten Bereich und dem zweiten Bereich kann daher effizient verwendet werden, um die Torsionssteifigkeit des Systems unabhängig von einer Momentenbestimmung zu überwachen.

Gemäß einer weiteren Ausführungsform des Verfahrens kann in dem Schritt des Bestimmens des ersten Systemparameters ein erster Verdrehwinkelverlauf bestimmt werden, welcher sich basierend auf dem Torsionsmoment in dem ersten Bereich einstellt. Der erste Verdrehwinkelverlauf kann eine Verdrehwinkeldifferenz oder einen Verdrehwinkelversatz über dem ersten Bereich aufweisen. Die Verdrehwinkeldifferenz oder der Verdrehwinkelversatz kann aus dem ersten Verdrehwinkelverlauf abgeleitet werden. Gemäß dieser Ausführungsform kann in dem Schritt des Bestimmens des zweiten Systemparameters ein zweiter Verdrehwinkelverlauf bestimmt werden, welcher sich basierend auf dem Torsionsmoment in dem zweiten Bereich einstellt. Der zweite Verdrehwinkelverlauf kann eine Verdrehwinkeldifferenz oder einen Verdrehwinkelversatz über dem zweiten Bereich aufweisen. Die Verdrehwinkeldifferenz oder der Verdrehwinkelversatz kann aus dem ersten Verdrehwinkelverlauf abgeleitet werden. Weiter kann in dem Schritt des Vergleichens der erste Verdrehwinkelverlauf mit dem zweiten Verdrehwinkelverlauf verglichen werden. Der erste Verdrehwinkelverlauf kann mindestens zwei Verdrehwinkel aufweisen, welche sich in dem ersten Bereich einstellen. Der zweite Verdrehwinkelverlauf kann mindestens zwei Verdrehwinkel aufweisen, welche sich in dem zweiten Bereich einstellen. Das aus dem Schritt des Vergleichens resultierende Vergleichsergebnis kann daher beispielsweise ein Verhältnis zwischen einer ersten Verdrehwinkeldifferenz, welche sich in dem ersten Bereich einstellt, und einer zweiten Verdrehwinkeldifferenz, welche sich in dem zweiten Bereich einstellt, sein. Das Verhältnis zum Überwachen der Torsionssteifigkeit kann somit in besonders effizienter Weise unabhängig von der auf das System wirkenden Last durchgeführt werden, um eine Änderung der Torsionssteifigkeit des Systems zu bestimmen.

Gemäß einer weiteren Ausführungsform des Verfahrens kann im Schritt des Voraussetzens der Bereich, welcher die vorbestimmte Torsionssteifigkeit aufweist, ein vorbestimmter Bereich des Systems sein. Bei dem vorbestimmten Bereich des Systems kann es sich um einen Bereich handeln, welcher eine vorbestimmte und zeitlich konstante Torsionssteifigkeit aufweisen. Bei dem vorbestimmten Bereich des Systems kann es sich um einen Bereich handeln, welcher eine bekannte Torsionssteifigkeit aufweist. Dem Schritt des Bestimmens von der Änderung der Torsionssteifigkeit kann daher mit dem Schritt des Voraussetzens die Annahme zugrunde liegen, dass sich die Torsionssteifigkeit des Systems in dem Bereich, welcher die vorbestimmte Torsionssteifigkeit aufweist, nicht ändert. Bei dem vorbestimmten Bereich kann es sich beispielsweise um einen Bereich des Systems handeln, welcher aus einem Material oder einem Werkstoff, beispielsweise einem Metall, gefertigt ist, welches für den Betrieb des Systems eine vorbestimmte und zeitlich konstante Torsionssteifigkeit aufweist. Das Material oder der Werkstoff kann eine bekannte Torsionssteifigkeit aufweisen. Der Systemparameter, welcher sich basierend auf dem Torsionsmoment in dem vorbestimmten Bereich einstellt, oder die Messgröße, welche an dem vorbestimmten Bereich sensorisch erfasst wird, kann somit für das Verfahren und den Schritt des Bestimmens der Änderung der Torsionssteifigkeit als ein Referenzparameter oder eine Referenzgröße fungieren. Bei dem Referenzparameter oder der Referenzgröße handelt es sich jedoch nicht um einen vorbestimmten Referenzparameter oder eine vorbestimmte Referenzgröße, sondern bei dem Referenzparameter oder der Referenzgröße kann es sich um eine bei einem Durchführen des Verfahrens in dem Betrieb des Systems bestimmten Referenzparameter oder bestimmte Referenzgröße handeln. Unter Annahme der vorbestimmten Torsionssteifigkeit kann das Verfahren zum Überwachen der Torsionssteifigkeit somit in vorteilhafter Weise in einer sich selbstreferenzierenden Weise durchgeführt werden.

Gemäß einer weiteren Ausführungsform des Verfahrens kann der Schritt des Voraussetzens nach dem Schritt des Vergleichens durchgeführt werden. Gemäß dieser Ausführungsform kann im Schritt des Voraussetzens der Bereich, welcher die vorbestimmte Torsionssteifigkeit aufweist, basierend auf dem aus dem Schritt des Vergleichens resultierenden Vergleichsergebnis festgelegt werden. Bei dem Bereich, welcher die vorbestimmte Torsionssteifigkeit aufweist, kann es sich daher auch um einen nicht vorbestimmten Bereich des Systems handeln, welcher erst im Betrieb des Systems festgelegt werden kann. Der Ausführungsform kann die Annahme zugrunde liegen, dass mindestens ein Bereich des ersten Bereichs und des zweiten Bereichs eine zeitlich konstante Torsionssteifigkeit aufweist, welche sich in dem festgelegten Bereich nicht ändert. Bei dem ersten Bereich kann es sich um ein Segment des Systems oder einer Systemkomponente handeln. Bei dem zweiten Bereich kann es sich um ein weiteres Segment des Systems oder derselben Systemkomponente handeln. Dem Verfahren kann die Annahme zugrunde liegen, dass bei unveränderter Torsionssteifigkeit des Systems, die Systemparameter, die Messgrößen, die Verdrehwinkel oder die Verdrehwinkelverläufe nicht voneinander abweichen. Liegt jedoch eine derartige Abweichung als Vergleichsergebnis vor, kann basierend auf der Abweichung bestimmt werden, ob und in welchem Bereich des Systems die Änderung der Torsionssteifigkeit vorliegt.

Gemäß einer weiteren Ausführungsform des Verfahrens kann der Schritt des Bestimmens der Änderung der Torsionssteifigkeit in Abhängigkeit von mindestens einer auf das System einwirkenden Einflussgröße durchgeführt werden, welche zumindest einen Systemparameter von dem ersten Systemparameters und dem zweiten Systemparameters beeinflusst. Bei der Einflussgröße kann es sich grundsätzlich um jede äußere oder innere Einflussgröße handeln, welche auf das System von außen oder innen einwirkt. Bei der Einflussgröße kann es sich um eine Umwelteinflussgröße, beispielsweise eine Temperatur, handeln, bei welcher das System betrieben wird oder welche das System aufweist. Unter Berücksichtigung der auf das System einwirkenden Einflussgrößen kann das Verfahren zum Überwachen der Torsionssteifigkeit in robuster Weise durchgeführt werden, um die Änderung der Torsionssteifigkeit auch unabhängig von einer sich ändernden und auf das System wirkenden Einflussgröße zu bestimmen.

Gemäß einer weiteren Ausführungsform des Verfahrens kann dieses als einen weiteren Schritt ein Bestimmen eines Ortes entlang einer Rotationsachse des Systems aufweisen, an welchem die Änderung der Torsionssteifigkeit des Systems vorliegt. Der Schritt des Bestimmens des Ortes kann basierend auf dem aus dem Schritt des Vergleichens resultierenden Vergleichsergebnis durchgeführt werden. Im Schritt des Bestimmens des Ortes kann bestimmt werden, dass der Ort entlang der Rotationsachse in dem ersten Bereich oder dem zweiten Bereich liegt. In dem Schritt des Bestimmen kann bestimmt werden, dass der Ort in dem weiteren Bereich von dem ersten Bereich und dem zweiten Bereich liegt, zu welchem in dem Schritt des Voraussetzens nicht vorausgesetzt worden ist, dass dieser die vorbestimmte Torsionssteifigkeit aufweist. Eine potentieller Schadensort des Systems, an welchem das System aufgrund einer sich ändernder Torsionssteifigkeit zu versagen droht, kann so zuverlässig bestimmt werden.

Gemäß einer weiteren Ausführungsform des Verfahrens kann das System eine Maschinenwelle zur Übertragung eines Drehmoments aufweisen. Bei der Maschinenwelle kann es sich beispielweise um eine Sonnenwelle eines Maschinengetriebes handeln. Gemäß dieser Ausführungsform kann der weitere Bereich, zu welchem in dem Schritt des Voraussetzens nicht vorausgesetzt worden ist, dass dieser die vorbestimmte Torsionssteifigkeit aufweist, ein Bereich oder ein Bestandteil der Maschinenwelle sein. Der Bereich, zu welchem in dem Schritt des Voraussetzens vorausgesetzt worden ist, dass dieser die vorbestimmte Torsionssteifigkeit aufweist, kann auch ein Bestandteil der Maschinenwelle sein. Mit dem Verfahren kann somit bestimmt werden, in welchem Bereich oder an welchem Ort entlang der Maschinenwelle eine Änderung der Torsionssteifigkeit auftritt. Mit dem Verfahren kann somit die Maschinenwelle auf ein Versagen oder einen Bruch überwacht werden, welcher aus einer verringerten Torsionssteifigkeit resultieren kann.

Gemäß einer weiteren Ausführungsform des Verfahrens kann der weitere Bereich, zu welchem in dem Schritt des Voraussetzens nicht vorausgesetzt worden ist, dass dieser die vorbestimmte Torsionssteifigkeit aufweist, zumindest teilweise aus einem Kompositwerkstoff gefertigt sein. Mit dem Verfahren kann somit ein aus dem Kompositwerkstoff gefertigter Bereich des Systems oder der Maschinenwelle auf eine verringerte Torsionssteifigkeit überwacht werden. Der Betrieb eines rotatorisch angetriebenen Systems, welches zumindest teilweise aus einem Kompositwerkstoff gefertigt ist, kann somit mit dem Verfahren betriebssicherer aufrechterhalten werden.

Die vorliegende Erfindung betrifft in einem weiteren Aspekt eine Überwachungseinrichtung zum Überwachen einer Torsionssteifigkeit eines rotatorisch angetriebenen Systems, welches eingerichtet ist, das Verfahren gemäß dem vorhergehenden Aspekt durchzuführen. Die Überwachungseinrichtung kann mindestens eine Recheneinheit zum Durchführen der Schritte des Verfahrens aufweisen. Die Überwachungseinrichtung kann ferner eine Warneinheit aufweisen, welche ein Warnsignal erzeugt und über eine Schnittstelle ausgeben kann. Die Warneinheit kann das Warnsignal erzeugen und ausgeben, wenn die Überwachungseinrichtung bei Durchführung des Schritts des Bestimmens der Änderung der Torsionssteifigkeit diese bestimmt hat. Das erzeugte und ausgegebene Warnsignal kann zudem räumliche Informationen zu dem weiteren Bereich von dem ersten Bereich und dem zweiten Bereich enthalten, in welchem die Änderung der Torsionssteifigkeit des Systems vorliegt. Basierend auf einer derartigen Warnung kann ein Bediener des Systems eine vorausschauende Wartung oder Reparatur in dem bestimmten weiteren Bereich vornehmen, um Schäden an dem System zu vermeiden.

Die vorliegende Erfindung betrifft noch in einem weiteren Aspekt eine Anlage, welche ein rotatorisch angetriebenes System und die Überwachungseinrichtung zum Überwachen einer Torsionssteifigkeit des Systems gemäß dem vorhergehenden Aspekt aufweist. Bei der Anlage kann es sich um eine Maschinenanlage, beispielsweise um eine Windkraftanlage, handeln. Ausführungsformen und Merkmale eines Aspekts können entsprechende Ausführungsformen und Merkmale eines jeden weiteren Aspekts bilden.

### Kurze Beschreibung der Figuren

- Figur 1: zeigt schematisch ein rotatorisch angetriebenen Systems gemäß einer Ausführungsform.
- Figur 2: zeigt schematisch ein rotatorisch angetriebenen Systems gemäß einer weiteren Ausführungsform.
- Figur 3: zeigt ein Ablaufdiagramm mit Schritten eines Verfahrens zum Überwachen einer Torsionssteifigkeit des rotatorisch angetriebenen Systems aus Figur 1 oder 2.
- Figur 4: zeigt schematisch eine Anlage mit dem System aus Figur 1 oder 2 und einer Überwachungseinrichtung zum Überwachen der Torsionssteifigkeit des Systems.

### Detaillierte Beschreibung von Ausführungsformen

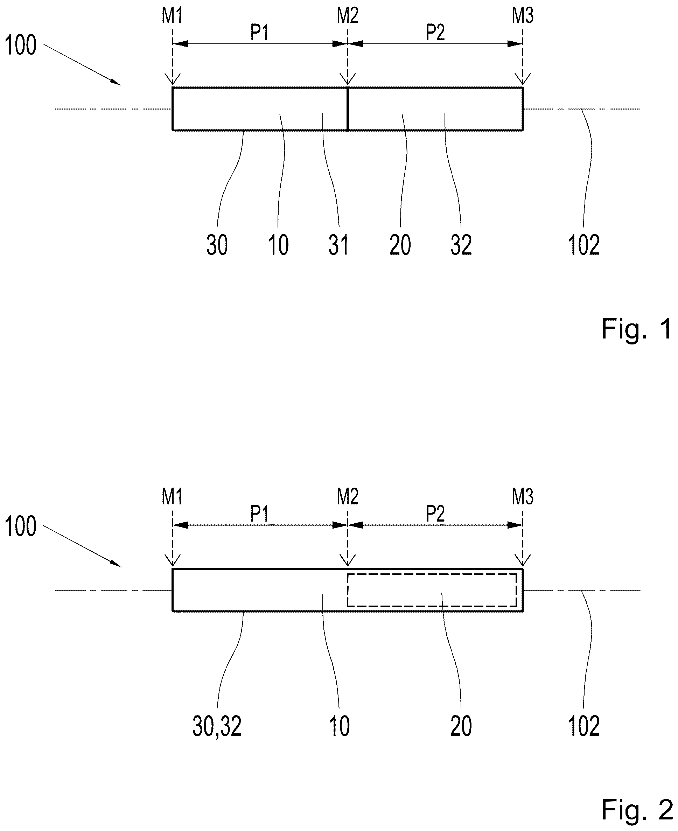

Figur 1 zeigt ein System 100, welches gemäß der schematisch gezeigten Ausführungsform eine Maschinenwelle 30 ist. Die Maschinenwelle 30 wird rotatorisch angetrieben, wobei die Maschinenwelle 30 um eine Rotationsachse 102 rotiert. Ein auf die Maschinenwelle 30 übertragenes Drehmoment erzeugt eine Torsion der Maschinenwelle 30. Die Maschinenwelle 30 weist eine Torsionssteifigkeit auf, welche sich auf einen Verdrehwinkelverlauf der Maschinenwelle 30 entlang der Rotationsachse 102 auswirkt.

In der in Figur 1 gezeigten Ausführungsform des Systems 100, weist die Maschinenwelle 30 einen ersten vorbestimmten Bereich 10 und einen zweiten vorbestimmten Bereich 20 auf, welche aneinander angrenzen. Der erste Bereich 10 ist aus einem Referenzwerkstoff 31 gefertigt, gemäß einer Ausführungsform aus einem metallischen Werkstoff, beispielsweise Stahl. Der zweite Bereich 20 ist aus einem Kompositwerkstoff 32 gefertigt, beispielsweise kohlenstofffaserverstärkter Kunststoff.

Bezogen auf den ersten Bereich 10 wird ein erster torsionssteifigkeitsabhängiger Systemparameter P1 bestimmt, welcher von der Torsionssteifigkeit der Maschinenwelle 30 in dem ersten Bereich 10 abhängt. Gemäß einer Ausführungsform werden in dem ersten Bereich 10 ein erster Messwert M1 und ein zweiter Messwert M2 an der Maschinenwelle 30 erfasst, welche zwei Verdrehwinkel des ersten Bereichs 10 sind. Die Messstellen, an welchen die Messwerte M1, M2 erfasst werden und auf welche sich die Verdrehwinkel beziehen sind entlang des ersten Bereichs 10 voneinander beabstandet. Gemäß der in Figur 1 gezeigten Ausführungsform liegen die Messstellen an den beiden axialen Grenzen des ersten Bereichs 10. Als erster torsionssteifigkeitsabhängiger Systemparameter P1 wird eine Verdrehwinkeldifferenz zwischen den beiden Verdrehwinkeln abgeleitet, wobei die Verdrehwinkeldifferenz von dem auf das System 100 einwirkenden Drehmoment und somit der in dem ersten Bereich 10 des System 100 wirkenden Torsion abhängt.

Bezogen auf den zweiten Bereich 20 wird ein zweiter torsionssteifigkeitsabhängiger Systemparameter P2 bestimmt, welcher von der Torsionssteifigkeit der Maschinenwelle 30 in dem zweiten Bereich 20 abhängt. Gemäß einer Ausführungsform werden in dem zweiten Bereich 20 der zweite Messwert M2 und ein dritter Messwert M3 an der Maschinenwelle 30 erfasst, welche zwei Verdrehwinkel des zweiten Bereichs 20 sind. Die Messstellen, an welchen die Messwerte M2, M3 erfasst werden und auf welche sich die Verdrehwinkel beziehen sind entlang des zweiten Bereichs 20 voneinander beabstandet. Gemäß der in Figur 1 gezeigten Ausführungsform liegen die Messstellen an den beiden axialen Grenzen des zweiten Bereichs 20. Als zweiter torsionssteifigkeitsabhängiger Systemparameter P2 wird eine Verdrehwinkeldifferenz zwischen den beiden Verdrehwinkeln abgeleitet, wobei die Verdrehwinkeldifferenz von dem auf das System 100 einwirkenden Drehmoment und somit der in dem zweiten Bereich 20 des Systems 100 wirkenden Torsion abhängt.

Figur 2 zeigt ein weiteres System 100, welches gemäß der schematisch gezeigten Ausführungsform eine Maschinenwelle 30 ist. Die Maschinenwelle 30 wird rotatorisch angetrieben, wobei die Maschinenwelle 30 um eine Rotationsachse 102 rotiert. Ein auf die Maschinenwelle 30 übertragenes Drehmoment erzeugt eine Torsion der Maschinenwelle 30. Die Maschinenwelle 30 weist eine Torsionssteifigkeit auf, welche sich auf einen Verdrehwinkelverlauf der Maschinenwelle 30 entlang der Rotationsachse 102 auswirkt.

In der in Figur 2 gezeigten Ausführungsform des Systems 100, weist die Maschinenwelle 30 einen ersten vorbestimmten Bereich 10 und einen zweiten vorbestimmten Bereich 20 auf, welche aneinander angrenzen. Die in Figur 2 gezeigte Ausführungsform unterscheidet sich von der in Figur 1 gezeigten Ausführungsform darin, dass der erste Bereich 10 und der zweite Bereich 20 aus einem Kompositwerkstoff 32 gefertigt sind, beispielsweise kohlenstofffaserverstärkter Kunststoff. Bezogen auf den ersten Bereich 10 wird, wie zu der in Figur 1 gezeigten Ausführungsform, der erste torsionssteifigkeitsabhängige Systemparameter P1 bestimmt. Bezogen auf den zweiten Bereich 20 wird, wie zu der in Figur 1 gezeigten Ausführungsform, der zweite torsionssteifigkeitsabhängige Systemparameter P2 bestimmt.

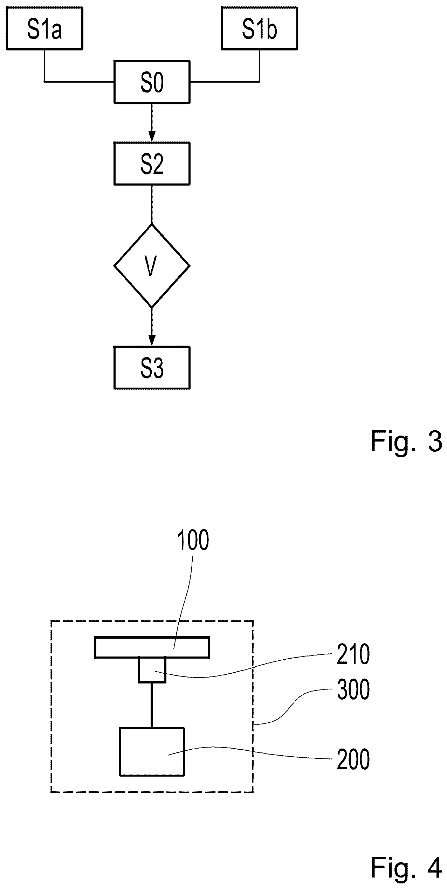

In Figur 3 sind Schritte eines Verfahrens zum Überwachen der Torsionssteifigkeit des in den Figuren 1 und 2 gezeigten rotatorisch angetriebenen Systems 100 gezeigt. Das Verfahren wird unabhängig von einem Erfassen des auf das System 100 einwirkenden Drehmoments und unabhängig von der in dem System 100 wirkenden Torsion durchgeführt. Dem Verfahren liegt als Annahme die in dem Schritt S0 getroffene Voraussetzung zugrunde, dass ein Bereich von dem ersten Bereich 10 und dem zweiten Bereich 20 eine vorbestimmte Torsionssteifigkeit aufweist. Bei dem Bereich, welcher die vorbestimmte Torsionssteifigkeit aufweist, kann es sich um einen vorbestimmten Bereich gemäß der in Figur 1 gezeigten Ausführungsform handeln, wobei der vorbestimmte Bereich der erste Bereich 10 ist, welcher aus dem Referenzwerkstoff 31 gefertigt ist. Gemäß dieser Ausführungsform ist der zu überwachende Bereich der zweite Bereich 20, welcher aus dem Kompositwerkstoff 32 gefertigt ist. Bei dem Bereich, welcher die vorbestimmte Torsionssteifigkeit aufweist, kann es sich um einen zu bestimmenden Bereich aus dem ersten Bereich 10 und dem zweiten Bereich 20 gemäß der in Figur 2 gezeigten Ausführungsform handeln, wobei beide Bereiche 10, 20 aus dem Kompositwerkstoff 32 gefertigt sind. Gemäß dieser Ausführungsform wird der in dem Schritt S0 getroffenen Voraussetzung die Annahme zugrunde gelegt, dass jedenfalls ein Bereich von dem ersten Bereich 10 und dem zweiten Bereich 20 eine vorbestimmte Torsionssteifigkeit aufweist, welche gemäß einer Ausführungsform zeitlich konstant ist.

In einem Schritt S1a wird der erste torsionssteifigkeitsabhängige Systemparameter P1 bestimmt, welcher sich basierend auf dem Torsionsmoment in dem ersten Bereich 10 einstellt, bestimmt. In einem weiteren Schritt S1b wird der zweite torsionssteifigkeitsabhängige Systemparameter P2 bestimmt, welcher sich basierend auf dem Torsionsmoment in dem zweiten Bereich 20 des Systems 100, einstellt. In einem weiteren Schritt S2 wird der erste Systemparameter P1 mit dem zweiten Systemparameter P2 verglichen. Als Vergleichsergebnis V liegt ein Verhältnis zwischen der Verdrehwinkeldifferenz des ersten Bereichs 10 und der Verdrehwinkeldifferenz des zweiten Bereichs 20 vor, wobei das Verhältnis unabhängig von dem auf das System 100 einwirkenden Drehmoment beziehungsweise der auf das System 100 einwirkenden Last ist oder angenommen wird.

In einem weiteren Schritt S3 wird eine Änderung der Torsionssteifigkeit des Systems 100 in dem weiteren Bereich von dem ersten Bereich 10 und dem zweiten Bereich 20 bestimmt, zu welchem in dem Schritt des Voraussetzens S0 nicht vorausgesetzt worden ist, dass dieser die vorbestimmte Torsionssteifigkeit aufweist.

Weich das Verhältnis zwischen der Verdrehwinkeldifferenz des ersten Bereichs 10 und der Verdrehwinkeldifferenz des zweiten Bereichs 20 für die in Figur 1 gezeigte Ausführungsform des Systems 100 von einem vorbestimmten Verhältnis ab oder ändert sich das Verhältnis bei wiederholter Durchführung des Verfahrens über die Zeit, kann in dem Schritt S3 festgelegt werden, dass sich die Torsionssteifigkeit in dem zweiten Bereich 20, welcher aus dem Kompositwerkstoff 32 gefertigt ist, verringert hat. Dem Festlegen der verringerten Torsionssteifigkeit des Kompositwerkstoffs 32 in dem zweiten Bereich 20 liegt die Voraussetzung beziehungsweise Annahme zugrunde, dass die Torsionssteifigkeit in dem ersten Bereich 10, welcher aus dem Referenzwerkstoff 31 gefertigt ist, unverändert und somit zeitlich konstant ist. In dem Schritt S3 kann daher für die in Figur 1 gezeigte Ausführungsform bestimmt werden, dass der zweite Bereich 20 basierend auf einer verringerten Torsionssteifigkeit schadhaft ist oder zu versagen droht.

Weicht das Verhältnis zwischen der Verdrehwinkeldifferenz des ersten Bereichs 10 und der Verdrehwinkeldifferenz des zweiten Bereichs 20 für die in Figur 2 gezeigte Ausführungsform des Systems 100 von einem vorbestimmten Verhältnis ab oder ändert sich das Verhältnis bei wiederholter Durchführung des Verfahrens über die Zeit, kann in dem Schritt S3 festgelegt werden, dass sich die Torsionssteifigkeit in einem zu bestimmenden Bereich von dem ersten Bereich 10 oder dem zweiten Bereich 20, welche beide aus dem Kompositwerkstoff 32 gefertigt sind, verringert hat. Dem Festlegen der verringerten Torsionssteifigkeit des Kompositwerkstoffs 32 in einem Bereich der beiden Bereiche 10, 20 liegt die Voraussetzung beziehungsweise Annahme zugrunde, dass die Torsionssteifigkeit jedenfalls in einem Bereich der beiden Bereiche 10, 20, welche beide aus dem Kompositwerkstoff 32 gefertigt ist, unverändert und somit zeitlich konstant ist. Basierend auf der Annahme kann bei einem sich über die Zeit bei wiederholter Durchführung des Verfahrens vergrößernden oder verringernden Verhältnis oder Quotienten zwischen dem ersten Systemparameter P1 und dem zweiten Systemparameter P2 festgelegt werden, dass der zweite Bereich 20 oder der erste Bereich 10 basierend auf einer verringerten Torsionssteifigkeit des jeweiligen Bereichs 10, 20 schadhaft ist oder zu versagen droht.

Figur 4 zeigt schematisch eine Anlage 300, welche das rotatorisch angetriebene System 100 und eine Überwachungseinrichtung 200 aufweist, welche eingerichtet ist, die Torsionssteifigkeit des Systems 100 zu überwachen und hierfür die Schritte des zu Figur 3 beschriebenen Verfahrens durchzuführen. Die Überwachungseinrichtung 200 weist eine Sensorik 210 zum Erfassen der Messwerte M1, M2, M3 und somit zum Bestimmen der Systemparameter P1, P2 auf.

### Bezugszeichen

- 10: erster Bereich
- 20: zweiter Bereich
- 30: Maschinenwelle
- 31: Referenzwerkstoff
- 32: Kompositwerkstoff
- 100: System
- 102: Rotationsachse
- 200: Überwachungseinrichtung
- 210: Sensorik
- 300: Anlage
- P1: erster Systemparameter
- P2: zweiter Systemparameter
- S0: Voraussetzen Torsionssteifigkeit
- S1a: Bestimmen erster Systemparameter
- S1b: Bestimmen zweiter Systemparameter
- S2: Vergleichen Systemparameter
- S3: Bestimmen Torsionssteifigkeitsänderung
- V: Vergleichsergebnis
- M1: erster Messwert
- M2: zweiter Messwert
- M3: dritter Messwert

## Patentansprüche

1. Verfahren zum Überwachen einer Torsionssteifigkeit eines rotatorisch angetriebenen Systems (100), mit den Schritten: Bestimmen (S1a) eines ersten torsionssteifigkeitsabhängigen Systemparameters (P1), welcher sich basierend auf einem Torsionsmoment, welches auf das System (100) einwirkt, in einem ersten Bereich (10) des Systems (100) einstellt, Bestimmen (S1b) eines zweiten torsionssteifigkeitsabhängigen Systemparameters (P2), welcher sich basierend auf dem Torsionsmoment in einem zweiten Bereich (20) des Systems (100) einstellt, Voraussetzen (S0), dass ein Bereich von dem ersten Bereich (10) und dem zweiten Bereich (20) eine vorbestimmte Torsionssteifigkeit aufweist, Vergleichen (S2) von dem ersten Systemparameter (P1) mit dem zweiten Systemparameter (P2), und Bestimmen (S3) einer Änderung der Torsionssteifigkeit des Systems (100) in dem weiteren Bereich von dem ersten Bereich (10) und dem zweiten Bereich (20), zu welchem in dem Schritt des Voraussetzens (S0) nicht vorausgesetzt worden ist, dass dieser die vorbestimmte Torsionssteifigkeit aufweist, basierend auf einem aus dem Schritt des Vergleichens (S2) resultierenden Vergleichsergebnis (V).

2. Verfahren nach Anspruch 1, wobei in dem Schritt des Bestimmens (S1a) des ersten Systemparameters (P1) eine erste torsionssteifigkeitsabhängige Messgröße an dem ersten Bereich (10) sensorisch erfasst wird, wobei in dem Schritt des Bestimmens (S1b) des zweiten Systemparameters (P2) eine zweite torsionssteifigkeitsabhängige Messgröße an dem zweiten Bereich (20) sensorisch erfasst wird, und wobei in dem Schritt des Vergleichens (S2) die erste Messgröße mit der zweiten Messgröße verglichen wird.

3. Verfahren nach Anspruch 1 oder 2, wobei in den Schritten des Bestimmens (S1a, S1b) des ersten Systemparameters (P1) und des zweiten Systemparameters (P2) der erste Systemparameter (P1) und der zweite Systemparameter (P2) gleichartige Systemparameter sind.

4. Verfahren nach einem der vorhergehenden Ansprüche, wobei in dem Schritt des Bestimmens (S1a) des ersten Systemparameters (P1) ein erster Verdrehwinkel bestimmt wird, welcher sich basierend auf dem Torsionsmoment in dem ersten Bereich (10) einstellt, wobei in dem Schritt des Bestimmens (S1b) des zweiten Systemparameters (P2) ein zweiter Verdrehwinkel bestimmt wird, welcher sich basierend auf dem Torsionsmoment in dem zweiten Bereich (20) einstellt, und wobei in dem Schritt des Vergleichens (S2) der erste Verdrehwinkel mit dem zweiten Verdrehwinkel verglichen wird.

5. Verfahren nach einem der vorhergehenden Ansprüche, wobei in dem Schritt des Bestimmens (S1a) des ersten Systemparameters (P1) ein erster Verdrehwinkelverlauf bestimmt wird, welcher sich basierend auf dem Torsionsmoment in dem ersten Bereich (10) einstellt, wobei in dem Schritt des Bestimmens (S1b) des zweiten Systemparameters (P2) ein zweiter Verdrehwinkelverlauf bestimmt wird, welcher sich basierend auf dem Torsionsmoment in dem zweiten Bereich (20) einstellt, und wobei in dem Schritt des Vergleichens (S2) der erste Verdrehwinkelverlauf mit dem zweiten Verdrehwinkelverlauf verglichen wird.

6. Verfahren nach einem der vorhergehenden Ansprüche, wobei im Schritt des Voraussetzens (S0) der Bereich, welcher die vorbestimmte Torsionssteifigkeit aufweist, ein vorbestimmter Bereich des Systems (100) ist.

7. Verfahren nach einem der vorhergehenden Ansprüche, wobei der Schritt des Voraussetzens (S0) nach dem Schritt des Vergleichens (S2) durchgeführt wird, und wobei im Schritt des Voraussetzens (S0) der Bereich, welcher die vorbestimmte Torsionssteifigkeit aufweist, basierend auf dem aus dem Schritt des Vergleichens (S2) resultierenden Vergleichsergebnis (V) festgelegt wird.

8. Verfahren nach einem der vorhergehenden Ansprüche, wobei der Schritt des Bestimmens (S3) der Änderung der Torsionssteifigkeit in Abhängigkeit von mindestens einer auf das System (100) einwirkenden Einflussgröße durchgeführt wird, welche zumindest einen Systemparameter von dem ersten Systemparameters (P1) und dem zweiten Systemparameters (P2) beeinflusst.

9. Verfahren nach einem der vorhergehenden Ansprüche, mit dem weiteren Schritt eines Bestimmens eines Ortes entlang einer Rotationsachse (102) des Systems (100), an welchem die Änderung der Torsionssteifigkeit des Systems (100) vorliegt, basierend auf dem aus dem Schritt des Vergleichens (S2) resultierenden Vergleichsergebnis (V).

10. Verfahren nach einem der vorhergehenden Ansprüche, wobei das System (100) eine Maschinenwelle (30) zur Übertragung eines Drehmoments aufweist, und wobei der weitere Bereich, zu welchem in dem Schritt des Voraussetzens (S0) nicht vorausgesetzt worden ist, dass dieser die vorbestimmte Torsionssteifigkeit aufweist, ein Bestandteil der Maschinenwelle (30) ist.

11. Verfahren nach einem der vorhergehenden Ansprüche, wobei der weitere Bereich, zu welchem in dem Schritt des Voraussetzens (S0) nicht vorausgesetzt worden ist, dass dieser die vorbestimmte Torsionssteifigkeit aufweist, zumindest teilweise aus einem Kompositwerkstoff (32) gefertigt ist.

12. Überwachungseinrichtung (200) zum Überwachen einer Torsionssteifigkeit eines rotatorisch angetriebenen Systems (100), welche eingerichtet ist, das Verfahren nach einem der vorhergehenden Ansprüche durchzuführen.

13. Anlage (300), welche ein rotatorisch angetriebenes System (100) und die Überwachungseinrichtung (200) zum Überwachen einer Torsionssteifigkeit des Systems (100) nach Anspruch 12 aufweist.
